# EUROPÄISCHE PATENTSCHRIFT

(11) **EP 2 398 032 B1**
(45) Veröffentlichungstag und Bekanntmachung des Hinweises auf die Patenterteilung: **18.04.2018**
(21) Anmeldenummer: 11004177.9
(22) Anmeldetag: 20.05.2011
(51) Int. Cl.: H01H 23/14, H02G 3/08

(54) **Taster als Bedienelement der Haus- und Gebäudensystemtechnik**
Switch as operating element for house and building system technology
Bouton comme élément de commande de la domotique de maison et de bâtiment

(30) Priorität: 18.06.2010 DE 102010024245
(43) Veröffentlichungstag der Anmeldung: 21.12.2011
(73) Patentinhaber: ABB AG, 68309 Mannheim (DE)
(72) Erfinder: Schulte-Lippern, Günter, 58513 Lüdenscheid (DE); Ewers, Manfred, 58239 Schwerte (DE); Sahlmann, Hans-Peter, 58454 Witten (DE); Zierach, Falk, 58513 Lüdenscheid (DE)

(56) Entgegenhaltungen:
- EP-A1- 0 625 817
- EP-A1- 1 202 310
- EP-A2- 2 012 336
- DE-A1- 4 104 572
- DE-A1- 19 619 124
- DE-A1-102008 014 917
- DE-B- 1 017 246
- DE-B3-102006 024 994
- DE-C1- 10 233 331
- DE-T2- 69 614 724
- US-A- 5 934 453
- US-A1- 2001 027 912

## Beschreibung

Die Erfindung betrifft einen Taster als Bedienelement der Haus- und Gebäudesystemtechnik, insbesondere für KNX-Anwendungen (Standard für Haus- und Gebäudesystemtechnik der Konnex-Association).

Aus der DE 10 2006 024 994 B3 ist ein elektronischer Schalter mit auf einem Sockel befestigter und gegenüber diesem Sockel beweglicher Betätigungswippe bekannt, wobei die Betätigungswippe über Betätigungsstifte am Sockel montierte Mikroschalter beaufschlagt. Es ist eine gefederte Achslagerung der Betätigungswippe vorgesehen, bei welcher ein Achsstummel der Betätigungswippe in eine Achsaufnahme eines am Sockel befestigten Primär-Federelementes eingreift, wobei Sekundär-Federelemente die Eckbereiche der Betätigungswippe weg vom Sockel drücken. Wippenverrastungen bilden einen Anschlag hinsichtlich der maximalen Beweglichkeit der Betätigungswippe gegenüber dem Sockel. Der Sockel ist mit einem Gerätesockel verbindbar, welcher einen Busankoppler enthält, der die von den Mikroschaltern erzeugten Signale einem Bussystem zuleitet. Alternativ ist der Sockel mit einem Gerätesockel verbindbar, welcher ein über die Mikroschalter ansteuerbares Relais enthält.

KNX-Bediengeräte sind üblicherweise so ausgelegt, dass sie einen Binäreingang als UP(Unterputz)-Einsatz aufweisen, woran ein Bedienelement angekoppelt ist. Ein solches Bedienelement besteht üblicherweise aus einem Sockel, auf dem eine Leiterplatte mit Mikroschaltern befestigt ist, wobei eine federnd gelagerte Wippe am Sockel befestigt, beispielsweise aufgerastet ist. Bei einem solchen Konzept ist für jedes konventionelle Installationsgeräte-Programm für Steckdosen / Schalter / Taster / Dimmer und für jede Farbe dieses Programms ein eigenes Bedienelement zu fertigen und auf Vorrat zu halten.

Der Erfindung liegt die Aufgabe zugrunde, einen optimierten Taster als Bedienelement der Haus- und Gebäudesystemtechnik anzugeben.

Diese Aufgabe wird erfindungsgemäß gelöst durch einen Taster als Bedienelement der Haus- und Gebäudesystemtechnik gemäß Anspruch 1. Eine bevorzugte Ausführungsform zeichnet sich dadurch aus, dass die Schaltwippen-Lagerung eine mit einer geraden Anlagefläche versehene Achsaufnahme zur Aufnahme einer mit einer geraden Anlagefläche versehenen Achse aufweist, wobei mindestens eine Druckfeder die Achse federnd derart beaufschlagt, dass die geraden Anlageflächen gegeneinander gedrückt werden. Hierdurch wird das Bedienelement nach einer Betätigung stets in eine neutrale Ruheposition (Mittelstellung, Nullposition parallel zum Tragring) zurückgestellt.

Zweckmäßig weisen die Schaltstößel Rippen auf, welche einen Anschlag zur Leiterplatte hin bilden. Hierdurch wird vermieden, dass die Mikroschalter durch zu hohen Druck beschädigt / zerstört werden.

Optional sind zur Begrenzung des Anschlags des Bedienelements Dämpfungselemente vorgesehen. Durch diese Maßnahme ergibt sich eine Verbesserung des "Schaltgefühls". Diese Dämpfungselemente sind vorzugsweise an einem Halteelement befestigt, welches über Rastzungen in Aufnahmen eines Tragrings des Unterputz-Einsatzes eingreift und derart einen Abdeckrahmen eines konventionellen Installationsgeräte-Programm für Steckdosen / Schalter / Taster / Dimmer am Unterputz-Einsatz arretiert.

Die mit der Erfindung erzielbaren Vorteile liegen insbesondere darin, dass als Bedienelement (Einfach-Bedienelement oder Zweifach-Bedienelement) eine konventionelle Wippe eines konventionellen Installationsgeräte-Programms für Steckdosen / Schalter / Taster / Dimmer verwendet werden kann, desgleichen ein konventioneller Abdeckrahmen dieses konventionellen Installationsgeräte-Programms für Steckdosen / Schalter / Taster / Dimmer. Unter konventionellen Installationsgeräte-Programmen werden dabei Programme verstanden, wie sie von zahlreichen Installationsgeräte-Herstellern vertrieben werden und verschiedene Wippschalter-Einsätze, Wipptaster-Einsätze, Dimmer-Einsätze, Steckdosen-Einsätze sowie Wippen und Abdeckrahmen 1fach / 2fach / 3fach, 4fach in bestimmtem Design und bestimmten Farben beinhalten.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: einen Schnitt durch einen Unterputz-Einsatz eines Tasters,
- Fig. 2: eine Seitenansicht eines Tasters,
- Fig. 3: eine Seitenansicht eines Unterputz-Einsatzes,
- Fig. 4: eine perspektivische Sicht auf die Rückseite eines Tasters,

- Fig. 5: eine "Explosionsansicht" eines Tasters,
- Fig. 6: ein Halteelement eines Tasters,
- Fig. 7: eine Sicht auf die Frontseite eines Unterputz-Einsatzes,
- Fig. 8: Details eines Halteelements,
- Fig. 9: eine perspektivische Sicht auf die Frontseite eines Unterputz-Einsatzes,
- Fig. 10: eine "Explosionsansicht" eines Unterputz-Einsatzes eines ZweifachTasters,
- Fig. 11: eine "Explosionsansicht" eines Unterputz-Einsatzes eines VierfachTasters.

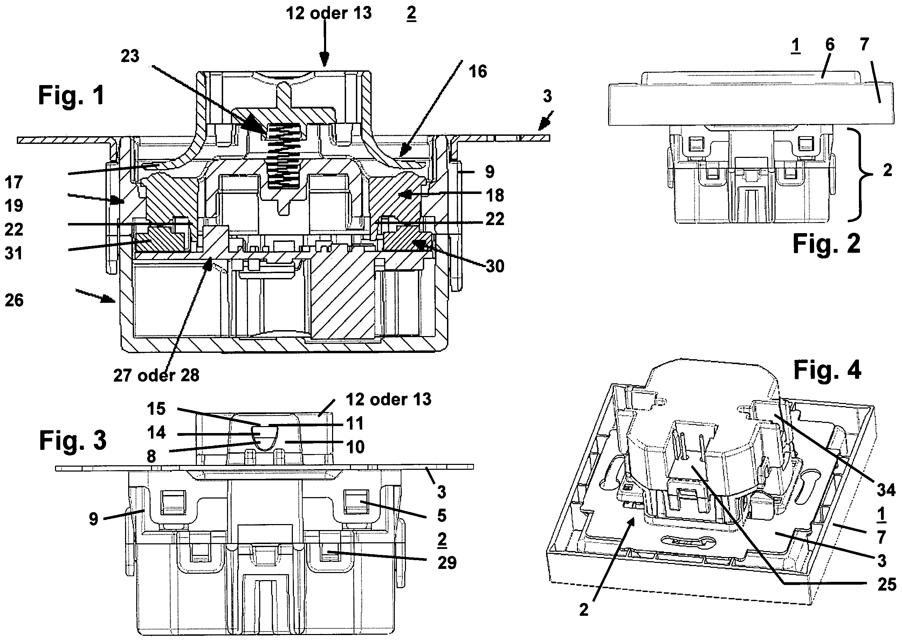

In Fig. 1 ist ein Schnitt durch einen Unterputz-Einsatz eines Tasters dargestellt. Der einen Binäreingang bildende Unterputz-Einsatz besteht aus einem Gehäuse-Oberteil 9, einem Gehäuse-Unterteil 26 und einem Tragring 3. Am Gehäuse-Oberteil 3 ist eine Schaltwippe 12 (zur Bildung eines Zweifach-Tasters) oder eine Schaltwippe 13 (zur Bildung eines Vierfach-Tasters) befestigt, welche über ihre Schaltarme 16 bzw. 17 und zwischengeschaltete Schaltstößel 18 bzw. 19 auf Mikroschalter 30 bzw. 31 einwirken kann, welche auf einer Leiterplatte 27 (bei Vorliegen eines Zweifach-Tasters) oder auf einer Leiterplatte 28 (bei Vorliegen eines Vierfach-Tasters) montiert sind. Mindestens eine Druckfeder 23 trägt dazu bei, die Schaltwippe nach erfolgter Betätigung wieder in eine stabile und neutrale Mittenstellung zurück zu setzen. Die Schaltstößel 18, 19 sind mit einer Rippe 22 versehen, welche einen Endanschlag definiert, d. h. die Schaltstößel 18, 19 pressen bei Betätigung der Schaltwippe 12 oder 13 gegen die Leiterplatte 27 oder 28, wodurch eine zu starke Beaufschlagung und damit eine Überlastung eines Mikroschalters sicher verhindert wird. Die Schaltstößel vermeiden eine Übertragung der Relativbewegung zwischen Schaltwippe (welche eine Kreisbewegung ausführt) einerseits und Mikroschalter andererseits.
Hierdurch wird die Schaltsicherheit erhöht.

In Fig. 2 ist eine Seitenansicht eines Tasters dargestellt, aus welcher hervorgeht, dass der Unterputz-Einsatz 2 des Tasters 1 mittels eines Abdeckrahmens 7 und eines Bedienelementes 6 respektive Wippe, ausgeführt in Form eines Einfach-Bedienelementes oder eines Zweifach-Bedienelementes, komplettiert wird. Vorteilhaft können sowohl Bedienelement 6 respektive Wippe als auch Abdeckrahmen 7 aus einem konventionellen Installationsgeräte-Programm für Steckdosen / Schalter / Taster / Dimmer entnommen werden.

In Fig. 3 ist eine Seitenansicht eines Unterputz-Einsatzes dargestellt, welche einerseits Verrastungen 5 zwischen dem Tragring 3 und dem Gehäuse-Oberteil 9 sowie Verrastungen 29 zwischen dem Gehäuse-Oberteil 9 und dem Gehäuse-Unterteil 26 zeigt und andererseits die Lagerung der Schaltwippe 12 oder 13 an einer Schaltwippen-Lagerung 10 des Gehäuse-Oberteils 9 dokumentiert. Für diese Schaltwippen-Lagerung greift eine Achse 14 der Schaltwippe 12 oder 13 in eine Achsaufnahme 8 der Schaltwippen-Lagerung 10. Von Wichtigkeit ist eine gerade Anlagefläche 11 in der Achsaufnahme 8 der Schaltwippen-Lagerung 10 bzw. "Achslagerung" an der dem Bedienelement 6 zugewandten Fläche der Achsaufnahme 8. Hierzu korrespondierend ausgebildet ist eine gerade Anlagefläche 15 der Achse 14. Bedingt durch die Federkraft der mindestens einen Druckfeder 23 werden die gerade Anlagefläche 15 der Achse 14 und die gerade Anlagefläche 11 der Achsaufnahme 8 respektive Achslagerung gegeneinander gepresst. Auf diese Art und Weise ergibt sich im Ruhezustand selbsttätig eine parallele Ausrichtung der Schaltwippe 12 oder 13 bezüglich des Tragrings 3 des Unterputz-Einsatzes 2.

In Fig. 4 ist eine perspektivische Sicht auf die Rückseite eines Tasters dargestellt. Im Bodenbereich des Unterputz-Einsatzes 2 des Tasters 1 ist ein Anschlussraum 25 für eine KNX-Buchse vorgesehen. Des Weiteren sind zwei Spreizenaufnahmen 34 zur optionalen Bestückung mit Federspreizen für die Befestigung in einer handelsüblichen UP-Gerätedose, der Tragring 3 und der Abdeckrahmen 7 gezeigt.

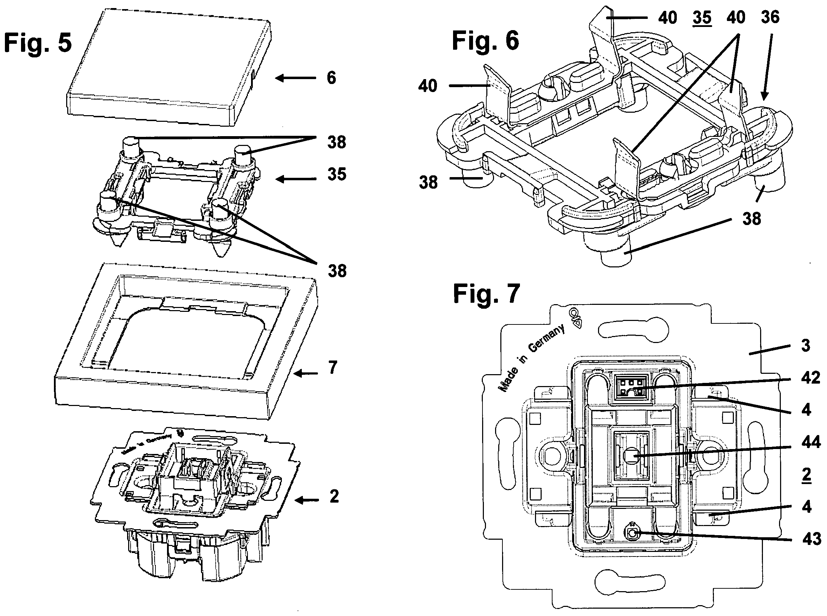

In Fig. 5 ist eine "Explosionsansicht" eines Tasters dargestellt, welche seine wesentlichen Baukomponenten, wie Unterputz-Einsatz 2, Abdeckrahmen 7, Halteelement 35 und Bedienelement 6 respektive Wippe zeigt. Das Halteelement 35 dient zur Arretierung des Abdeckrahmens 7 am Unterputz-Einsatz 2. Eine optionale Funktion des Halteelements 35 besteht darin, den Anschlag des Bedienelements 6 dämpfend zu begrenzen. Hierzu ist das Halteelement 35 mit Dämpfungselementen 38 versehen.

In Fig. 6 ist ein Halteelement eines Tasters im Detail dargestellt. Das einen quadratischen Grundrahmen 36 aufweisende Halteelement 35 weist vier symmetrisch angeordnete, federnde Rastzungen 40 zur Einführung in korrespondierende Aufnahmen 4 (siehe hierzu Fig. 7) des Tragrings 3 auf. An der den Rastzungen 40 gegenüberliegenden Hauptfläche besitzt das Halteelement 35 in den Eckbereiches seines Grundrahmens 36 Dämpfungselemente 38, die einen gedämpften Anschlag des Bedienelementes 6 bei dessen Betätigung sicherstellen - siehe hierzu auch Fig. 5.

In Fig. 7 ist eine Sicht auf die Frontseite eines Unterputz-Einsatzes dargestellt. Der Unterputz-Einsatz 2 weist eine Schnittstelle 42 für den Anschluss eines Programmiergerätes, einen Programmiertaster 43 zur Einleitung einer Inbetriebnahme und ein Orientierungslicht 44, vorzugsweise eine LED auf. Des Weiteren sind die unter Fig. 6 angesprochenen Aufnahmen 4 des Tragrings 3 gezeigt.

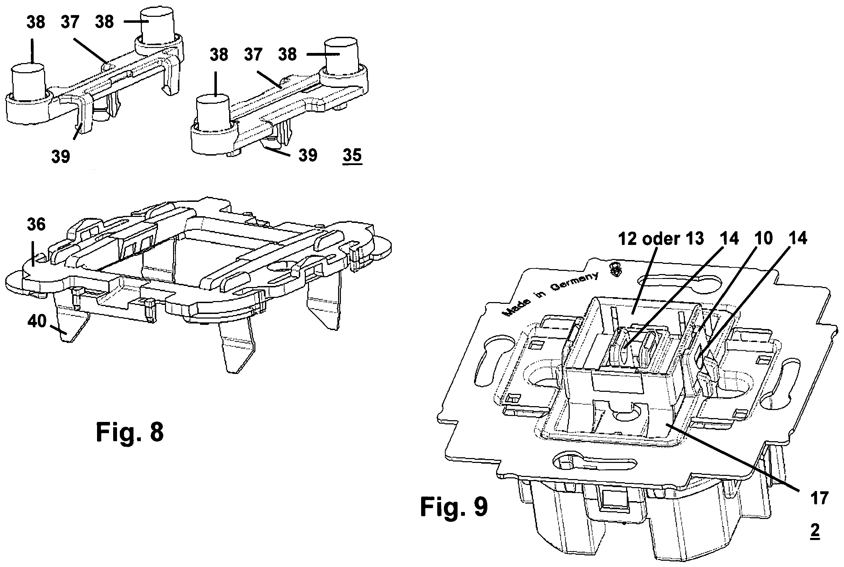

In Fig. 8 sind Details eines Halteelements 35 dargestellt. Vorteilhaft wird ein für elektromechanische Schalter eines konventionellen Installationsgeräte-Programms für Steckdosen / Schalter / Taster / Dimmer verwendetes und handelsübliches Haltelement modifiziert, indem zwei Dämpfungselement-Träger 37 auf den Grundrahmen 36 aufgerastet werden. Jeder Dämpfungselement-Träger 37 weist auf seiner einen Hauptfläche je zwei Dämpfungselemente 38 und auf seiner gegenüberliegenden Hauptfläche Rastmittel 39, vorzugsweise Rastnasen, für die Verrastung mit derjenigen Hauptfläche des Grundrahmens 36 auf, welche nicht mit den Rastzungen 40 versehen ist.

In Fig. 9 ist eine perspektivische Sicht auf die Frontseite eines Unterputz-Einsatzes 2 dargestellt, aus der insbesondere die Lagerung der Schaltwippe 12 oder 13 mit ihrer in die Achsaufnahmen 8 der Schaltwippen-Lagerung 10 eingreifenden Achse 14 zu erkennen ist. Des Weiteren sind die Schaltarme 17 der Schaltwippe gezeigt.

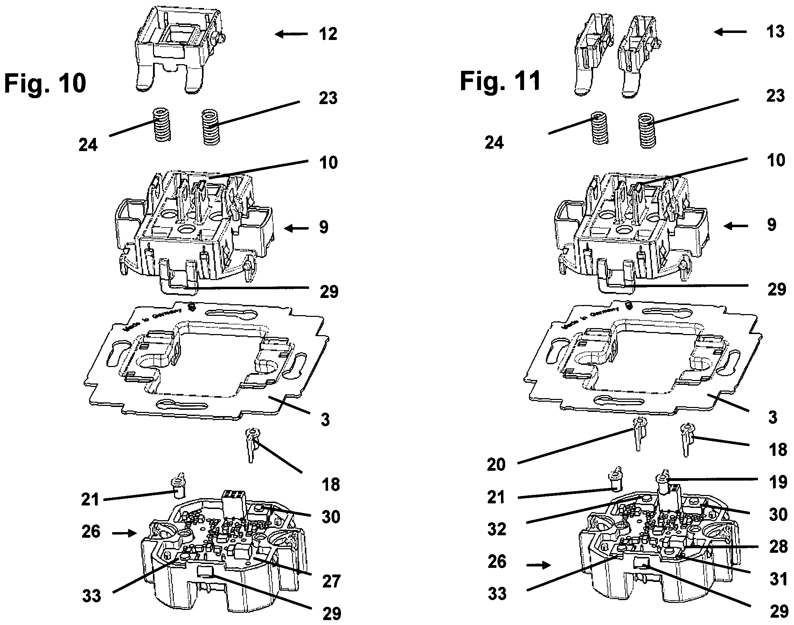

In Fig. 10 ist eine "Explosionsansicht" eines Unterputz-Einsatzes eines Zweifach-Tasters dargestellt. Es sind die folgenden Hauptkomponenten zu erkennen:
- Gehäuse-Unterteil 26 inklusive Leiterplatte 27 mit zwei darauf befestigten Mikroschaltern 30, 33,
- zwei Schaltstößel 18, 21,
- Tragring 3,
- Gehäuse-Oberteil 9 inklusive Schaltwippen-Lagerung 10,
- zwei Druckfedern 23, 24,
- Schaltwippe 12

Des Weiteren ist die Verrastung 29 zwischen Gehäuse-Oberteil 9 und Gehäuse-Unterteil 26 gut zu erkennen.

Fig. 11 ist eine "Explosionsansicht" eines Unterputz-Einsatzes eines Vierfach-Tasters dargestellt. Es sind die folgenden Hauptkomponenten zu erkennen:
- Gehäuse-Unterteil 26 inklusive Leiterplatte 28 mit vier darauf befestigten Mikroschaltern 30, 31, 32, 33,
- vier Schaltstößel 18, 19, 20, 21,
- Tragring 3,
- Gehäuse-Oberteil 9 inklusive Schaltwippen-Lagerung 10,
- zwei Druckfedern 23, 24,
- Schaltwippe 13

Des Weiteren ist die Verrastung 29 zwischen Gehäuse-Oberteil 9 und Gehäuse-Unterteil 26 gut zu erkennen.

### Bezugszeichenliste

- 1: Taster
- 2: Unterputz-Einsatz, bestehend aus Gehäuse-Oberteil, Gehäuse-Unterteil, Tragring
- 3: Tragring
- 4: Aufnahme für Rastzunge des Halteelements
- 5: Verrastung mit dem Gehäuse-Oberteil
- 6: Bedienelement (Einfach-Bedienelement oder Zweifach-Bedienelement) respektive Wippe eines konventionellen Installationsgeräte-Programms
- 7: Abdeckrahmen eines konventionellen Installationsgeräte-Programms
- 8: Achsaufnahme in Schaltwippen-Lagerung
- 9: Gehäuse-Oberteil, identisch für Zweifach und Vierfach-Taster
- 10: Schaltwippen-Lagerung
- 11: gerade Anlagefläche in der Schaltwippen-Lagerung bzw. Achslagerung
- 12: Schaltwippe für Zweifach-Taster
- 13: Schaltwippe für Vierfach-Taster
- 14: Achse
- 15: gerade Anlagefläche der Achse
- 16: Schaltarm
- 17: Schaltarm
- 18: Schaltstößel
- 19: Schaltstößel
- 20: Schaltstößel
- 21: Schaltstößel
- 22: Rippe (Anschlag zur Leiterplatte)
- 23: Druckfeder
- 24: Druckfeder
- 25: Anschlussraum für KNX-Buchse
- 26: Gehäuse-Unterteil
- 27: Leiterplatte für Zweifach-Taster
- 28: Leiterplatte für Vierfach-Taster
- 29: Verrastung zwischen Gehäuse-Oberteil und Gehäuse-Unterteil
- 30: Mikroschalter
- 31: Mikroschalter
- 32: Mikroschalter
- 33: Mikroschalter
- 34: Spreizenaufnahme
- 35: Halteelement
- 36: Grundrahmen
- 37: Dämpfungselement-Träger
- 38: Dämpfungselemente
- 39: Rastnasen
- 40: Rastzungen
- 41: -
- 42: Schnittstelle für Programmiergerät
- 43: Programmiertaster für Inbetriebnahme
- 44: Orientierungslicht

## Patentansprüche

1. Taster (1) der Haus- und Gebäudesystemtechnik,
• mit einem Bedienelement
• mit einem Unterputz-Einsatz (2), bei dem neben dem Binäreingang auch eine Leiterplatte (27, 28) mit darauf montierten Mikroschaltern (30, 31, 32, 33) untergebracht ist,
• wobei der Unterputz-Einsatz (2) eine Schaltwippe (12, 13) und Schaltwippen-Lagerung (10) zur Aufnahme der Schaltwippe (12, 13) aufweist,
**dadurch gekennzeichnet, dass**
• die Schaltwippe (12, 13) Schaltarme (16, 17) besitzt, welche die Mikroschalter (30, 31, 32, 33) über separate Schaltstößel (18, 19, 20, 21) betätigt,
• als Bedienelement (6) eine Wippe eines konventionellen Installationsgeräte-Programm für Steckdosen / Schalter / Taster / Dimmer verwendet ist, und
• die Schaltstößel (18, 19, 20, 21) Rippen (22) aufweisen, welche einen Anschlag zur Leiterplatte (27, 28) hin bilden.

2. Taster (1) nach Anspruch 1, **dadurch gekennzeichnet, dass** die Schaltwippen-Lagerung (10) eine mit einer geraden Anlagefläche (11) versehene Achsaufnahme (8) zur Aufnahme einer mit einer geraden Anlagefläche (15) versehenen Achse (14) aufweist, wobei mindestens eine Druckfeder (23, 24) die Achse (14) federnd derart beaufschlagt, dass die geraden Anlageflächen (11, 15) gegeneinander gedrückt werden.

3. Taster (1) nach Anspruch 1, **dadurch gekennzeichnet, dass** zur Begrenzung des Anschlags des Bedienelements (6) Dämpfungselemente (38) vorgesehen sind.

4. Taster (1) nach Anspruch 3, **dadurch gekennzeichnet, dass** die Dämpfungselemente (38) an einem Halteelement (35) befestigt sind, welches über Rastzungen (40) in Aufnahmen (4) eines Tragrings (3) des Unterputz-Einsatzes eingreift und derart einen Abdeckrahmen (7) eines konventionellen Installationsgeräte-Programms für Steckdosen / Schalter / Taster / Dimmer am Unterputz-Einsatz (2) arretiert.

5. Taster (1) nach einem der vorstehenden Ansprüche, **dadurch gekennzeichnet, dass** der Unterputz-Einsatz (2) eine Schnittstelle (42) für ein Programmiergerät aufweist.

6. Taster (1) nach einem der vorstehenden Ansprüche, **dadurch gekennzeichnet, dass** der Unterputz-Einsatz (2) einen Programmiertaster (43) für Inbetriebnahme aufweist.

7. Taster nach einem der vorstehenden Ansprüche, **dadurch gekennzeichnet, dass** der Unterputz-Einsatz (2) einen Anschlussraum (25) für KNX-Buchse aufweist.

8. Taster (1) nach einem der vorstehenden Ansprüche, **dadurch gekennzeichnet, dass** der Unterputz-Einsatz (2) aus einem Gehäuse-Oberteil (9) und einem Gehäuse-Unterteil (26) besteht, wobei die beiden Teile über eine Verrastung (29) miteinander verbunden sind.

## Claims

1. Pushbutton switch (1) for home and building systems technology,
• with an operating element
• with a flush-mounted insert (2), accommodating along with the binary input also a circuit board (27, 28) with micro switches (30, 31, 32, 33) mounted on it,
• the flush-mounted insert (2) having a rocker switch (12, 13) and a rocker switch mounting (10) for receiving the rocker switch (12, 13),
**characterized in that**
• the rocker switch (12, 13) has switching arms (16, 17), which actuates the micro switches (30, 31, 32, 33) by way of separate switching plungers (18, 19, 20, 21),
• a rocker of a conventional range of installation equipment for sockets/switches/pushbutton switches/ dimmers is used as the operating element (6), and
• the switching plungers (18, 19, 20, 21) have ribs (22), which form a stop with respect to the circuit board (27, 28).

2. Pushbutton switch (1) according to Claim 1, **characterized in that** the rocker switch mounting (10) has a pin receptacle (8), provided with a straight bearing face (11), for receiving a pin (14) provided with a straight bearing face (15), wherein at least one compression spring (23, 24) acts resiliently on the pin (14) in such a way that the straight bearing faces (11, 15) are pressed against one another.

3. Pushbutton switch (1) according to Claim 1, **characterized in that** damping elements (38) are provided for limiting the stop of the operating element (6) .

4. Pushbutton switch (1) according to Claim 3, **characterized in that** the damping elements (38) are secured on a holding element (35), which engages by way of latching tongues (40) in receptacles (4) of a carrying ring (3) of the flush-mounted insert and in this way arrests a covering frame (7) of a conventional range of installation equipment for sockets/switches/ pushbutton switches/dimmers on the flush-mounted insert (2) .

5. Pushbutton switch (1) according to one of the preceding claims, **characterized in that** the flush-mounted insert (2) has an interface (42) for a programming device.

6. Pushbutton switch (1) according to one of the preceding claims, **characterized in that** the flush-mounted insert (2) has a programming button (43) for initial operation.

7. Pushbutton switch according to one of the preceding claims, **characterized in that** the flush-mounted insert (2) has a connection space (25) for a KNX socket.

8. Pushbutton switch (1) according to one of the preceding claims, **characterized in that** the flush-mounted insert (2) consists of a housing upper part (9) and a housing lower part (26), wherein the two parts are connected to one another by way of a latching mechanism (29).

## Revendications

1. Bouton (1) pour la domotique de maison et de bâtiment,
- comportant un élément de commande
- comportant un insert encastrable (2), dans lequel une carte de circuit imprimé (27, 28) sur laquelle sont montés des micro-commutateurs (30, 31, 32, 33) est installée en plus de l'entrée binaire,
- dans lequel l'insert encastrable (2) comporte un commutateur à bascule (12, 13) et un palier de commutateur à bascule (10) destiné à recevoir le commutateur à bascule (12, 13),
**caractérisé en ce que**
- le commutateur à bascule (12, 13) possède des bras de commutation (16, 17) qui actionne les micro-commutateurs (30, 31, 32, 33) par l'intermédiaire de poussoirs de commutation (18, 19, 20, 21) séparés,
- une bascule d'un programme d'appareil d'installation est utilisée en tant qu'élément de commande (6) pour des prises/commutateurs/boutons/atténuateurs, et
- les poussoirs de commutation (18, 19, 20, 21) présentent des ondulations qui forment une butée agissant sur la carte de circuit imprimé (27, 28).

2. Bouton (1) selon la revendication 1, **caractérisé en ce que** le palier de commutateur à bascule (10) comporte un évidement d'axe (8) muni d'une surface d'appui rectiligne (11), destiné à recevoir un axe (14) muni d'une surface d'appui rectiligne (15), dans lequel au moins un ressort de compression (23, 24) sollicite de manière élastique l'axe (14) de manière à ce que les surfaces d'appui rectilignes (11, 15) soient comprimées l'une contre l'autre.

3. Bouton (1) selon la revendication 1, **caractérisé en ce qu'**il est prévu des éléments d'amortissement (38) destinés à limiter la sollicitation de l'élément de commande (6).

4. Bouton (1) selon la revendication 3, **caractérisé en ce que** les éléments d'amortissement (38) sont fixés à un élément de maintien (35) qui s'engage par l'intermédiaire de cliquets (40) dans des évidements (4) d'un anneau de support (3) de l'insert encastrable et arrête ainsi un châssis de recouvrement (7) d'un programme d'appareil d'installation classique destiné à des prises/commutateurs/boutons/atténuateurs sur l'insert encastrable (2).

5. Bouton (1) selon l'une des revendications précédentes, **caractérisé en ce que** l'insert encastrable (2) comporte une interface (42) destinée à un appareil de programmation.

6. Bouton (1) selon l'une des revendications précédentes, **caractérisé en ce que** l'insert encastrable (2) comporte un bouton de programmation (43) destiné à la mise en fonctionnement.

7. Bouton selon l'une des revendications précédentes, **caractérisé en ce que** l'insert encastrable (2) comporte un espace de raccordement (25) destiné à des douilles KNX.

8. Bouton (1) selon l'une des revendications précédentes, **caractérisé en ce que** l'insert encastrable (2) est constitué d'une partie supérieure de boîtier (9) et d'une partie inférieure de boîtier (26), dans lequel les deux parties sont reliées l'une à l'autre par l'intermédiaire d'un dispositif d'enclenchement (29) .
